# EUROPEAN PATENT APPLICATION

(11) **EP 4 782 721 A1**
(43) Date of publication of application: **29.07.2026**
(21) Application number: 24897035.2
(22) Date of filing: 09.09.2024
(51) Int. Cl.: F16H 48/08, F16H 1/28, F16H 57/021, H02K 7/116

(54) **VEHICLE DRIVE DEVICE**

(30) Priority: 28.11.2023 JP 2023200815
(71) Applicant: AISIN CORPORATION, Kariya-shi, Aichi 448-8650 (JP)
(72) Inventor: NAKAJIMA Genta, Kariya-shi, Aichi 448-8650 (JP); TAKAHASHI Ryota, Kariya-shi, Aichi 448-8650 (JP); KOSHIDA Takafumi, Kariya-shi, Aichi 448-8650 (JP); OKOCHI Keita, Kariya-shi, Aichi 448-8650 (JP); MATSUDA Shintaro, Kariya-shi, Aichi 448-8650 (JP); MITSUHASHI Kazushige, Kariya-shi, Aichi 448-8650 (JP)
(74) Representative: Kramer Barske Schmidtchen Patentanwälte PartG mbB
(86) International application number: PCT/JP2024/032197
(87) International publication number: WO 2025/115344

(57) **Abstract**

In a vehicle drive device (100), a rotary electric machine (1), a planetary gear mechanism (4), and an output differential gear device (5) are coaxially disposed. A differential case (51) is supported in a radial direction (R) with respect to a case (9) in a rotatable state with respect to the case (9) via a bush (B5), the bush (B5) being disposed at a position overlapping a differential gear mechanism (50) as viewed in an axial direction (L) on a side opposite to a side where the planetary gear mechanism (4) is located with respect to the differential gear mechanism (50). A carrier (CR) is supported in the radial direction (R) with respect to the case (9) in a rotatable state with respect to the case (9) via a rolling bearing (B4).

## Description

### Technical Field

This disclosure relates to a vehicle drive device.

### Background Art

WO2023/068334A discloses a so-called single-shaft vehicle drive device (100) in which a rotary electric machine (1) serving as a driving force source of a pair of wheels (W1, W2), a planetary gear mechanism (4) functioning as a speed reducer, and a differential gear device (5) that distributes power to the pair of wheels (W1, W2) are coaxially disposed (in the background art, the reference signs in parentheses are those of the reference document). The planetary gear mechanism (4) is a two-stage planetary gear mechanism having a common carrier (CR1), and includes one sun gear (SG1), a first planetary gear (PG1) meshing with the sun gear (SG1), a first ring gear (RG1) meshing with the first planetary gear (PG1), a second planetary gear (PG2) supported by the carrier (CR1) together with the first planetary gear (PG1) and rotating integrally with the first planetary gear (PG1), and a second ring gear (RG2) meshing with the second planetary gear (PG2). When input from the sun gear (SG1) of the planetary gear mechanism is output from the second ring gear (RG2) in a state where the first ring gear (RG1) is fixed and the carrier (CR1) is free, the planetary gear mechanism (4) can achieve a high reduction ratio of at least about 20 while restricting a dimension in a radial direction to be small. Since the vehicle drive device (1) easily achieves a large reduction ratio, it is easy to amplify a torque and to reduce the size of the rotary electric machine (1).

Further, in a case of using the speed reducer implemented by the planetary gear mechanism (4) as described above in the single-shaft vehicle drive device (100), it is easy to provide a design to offset a meshing reaction force of the gears in the radial direction, and a loss of torque in a power transmission path can be reduced by omitting a bearing in the radial direction. In addition to the fact that it is easy to reduce the size of the rotary electric machine (1), it is easy to further reduce the size of the vehicle drive device (100) by not providing a bearing in the radial direction.

### Citation List

### Patent Literature

PTL 1: WO2023/068334A

### Summary of Invention

### Technical Problem

As described above, if the size of the vehicle drive device is reduced by reducing the number of bearings in the radial direction, a centrifugal force due to eccentricity of a rotor of the rotary electric machine tends to increase when the rotary electric machine rotates at a high speed. As a result, the planetary gear may be oscillated, and primary vibration of the rotation of the rotor may be noticeable in the entire vehicle drive device. In order to restrict such vibration, one or both of (i) a carrier that supports the planetary gear and (ii) an input rotary element of the differential gear device that rotates integrally with the second ring gear serving as an output rotary element of the planetary gear mechanism may be supported in the radial direction with respect to a case via a bearing or the like. However, if a bearing in the radial direction or the like is simply added, a torque loss in the power transmission path increases. Further, by providing such a support mechanism in the radial direction, a dimension of the vehicle drive device in the radial direction may increase.

In view of the above background, it is desired to reduce primary vibration of rotation of a rotor while restricting an increase in torque loss in a power transmission path in a single-shaft vehicle drive device that includes, as a speed reducer, a two-stage planetary gear mechanism including one sun gear, two planetary gears supported by a common carrier, and two ring gears.

### Solution to Problem

In view of the above, there is provided a vehicle drive device including: a rotary electric machine including a rotor; a first output member drivingly coupled to a first wheel; a second output member drivingly coupled to a second wheel; a planetary gear mechanism configured to reduce a speed of rotation of the rotor; an output differential gear device including a differential case and a differential gear mechanism accommodated in the differential case, and configured to distribute rotation transmitted from the planetary gear mechanism to the differential case to the first output member and the second output member; and a case accommodating the rotary electric machine, the planetary gear mechanism, and the output differential gear device. The rotary electric machine, the first output member, the second output member, the planetary gear mechanism, and the output differential gear device are coaxially disposed. The planetary gear mechanism includes a sun gear, a carrier, a first ring gear, and a second ring gear. The sun gear is coupled to the rotor so as to rotate integrally therewith. The first ring gear is coupled to a non-rotary member. The second ring gear is coupled to the differential case so as to rotate integrally therewith. The carrier rotatably supports a first pinion gear and a second pinion gear that rotate integrally with each other. The first pinion gear meshes with the sun gear and the first ring gear. The second pinion gear has a smaller diameter than the first pinion gear and meshes with the second ring gear. Assuming a direction along a rotation axis of the rotor as an axial direction and a direction orthogonal to the rotation axis as a radial direction, the differential case is supported in the radial direction with respect to the case in a rotatable state with respect to the case via a bush, the bush being disposed at a position overlapping the differential gear mechanism as viewed in the axial direction on a side opposite to a side where the planetary gear mechanism is located with respect to the differential gear mechanism. The carrier is supported in the radial direction with respect to the case in a rotatable state with respect to the case via a rolling bearing.

According to this configuration, the carrier that supports the first pinion gear and the second pinion gear is stably supported in the radial direction with respect to the case via the rolling bearing. Accordingly, even when vibration caused by eccentricity of the rotor is transmitted via the first pinion gear, the vibration of the carrier is restricted. The output differential gear device is supported on a side of the planetary gear mechanism by self-alignment by meshing of the second ring gear, and is supported on a side opposite to the planetary gear mechanism via a bush with a slight radial gap with respect to the case. Even if the output differential gear device is not firmly supported in the radial direction, since vibration of the carrier is restricted, transmission of vibration caused by eccentricity to the output differential gear device via the second pinion gear is restricted. Since an additional support structure in the radial direction is substantially limited to the rolling bearing that supports the carrier, an increase in torque loss in a power transmission path from the rotary electric machine to the output member is also restricted. As described above, according to this configuration, in a single-shaft vehicle drive device that includes, as a speed reducer, a two-stage planetary gear mechanism including one sun gear, two planetary gears supported by a common carrier, and two ring gears, primary vibration of rotation of a rotor can be reduced while restricting an increase in torque loss in a power transmission path.

Additional features and advantages of the vehicle drive device will become apparent from the following description of the exemplary and non-limiting embodiment described with reference to the drawings.

### Brief Description of Drawings

[FIG. 1] FIG. 1 is a skeleton diagram of a vehicle drive device.
[FIG. 2] FIG. 2 is a schematic cross-sectional view illustrating an example of the vehicle drive device.
[FIG. 3] FIG. 3 is a schematic cross-sectional view illustrating an example of the vehicle drive device.

### Description of Embodiments

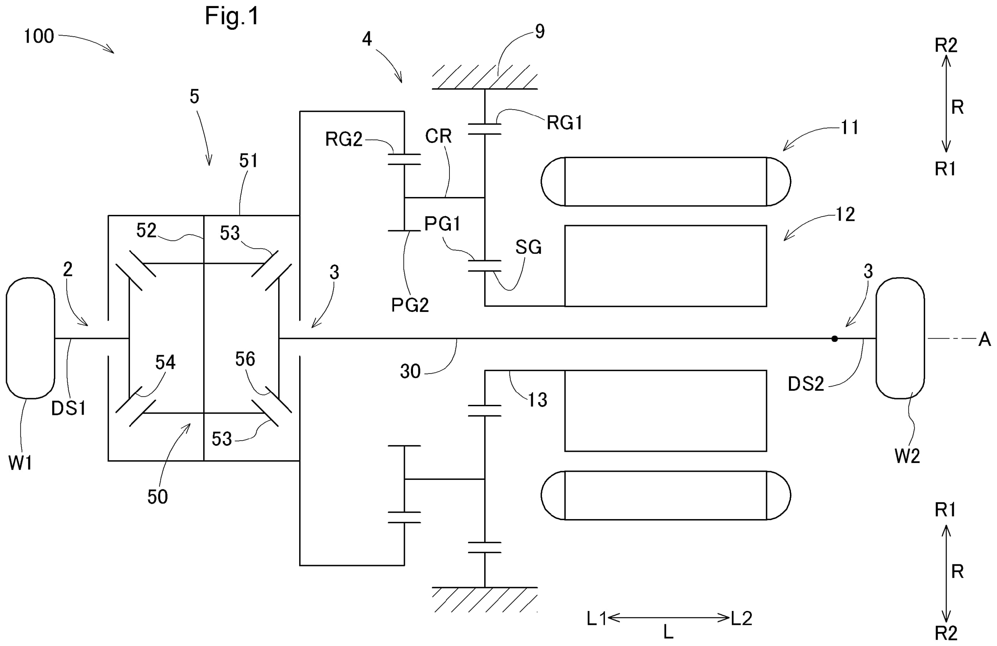

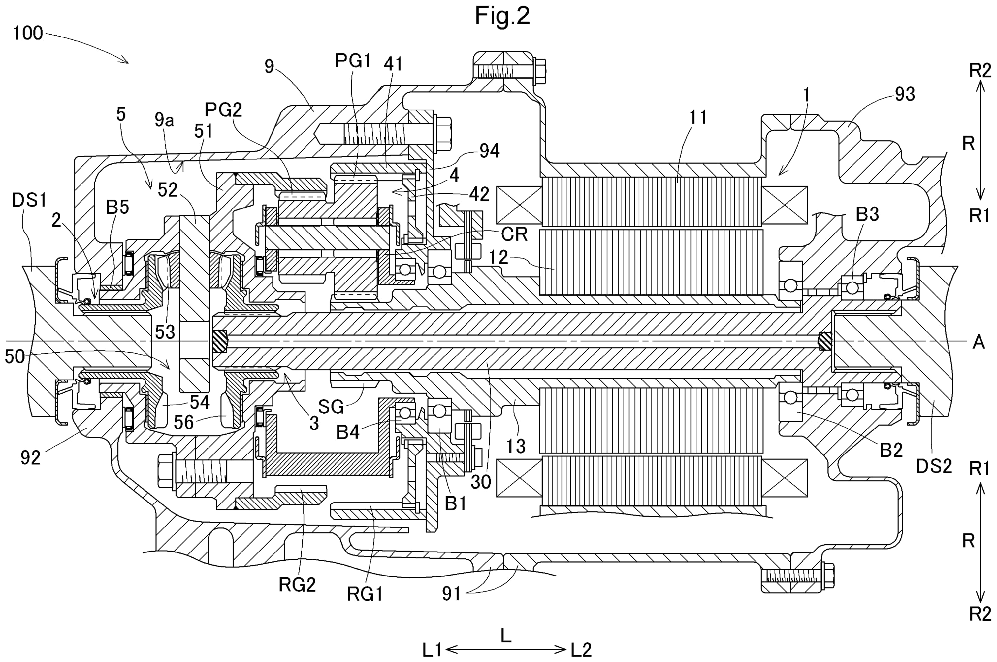

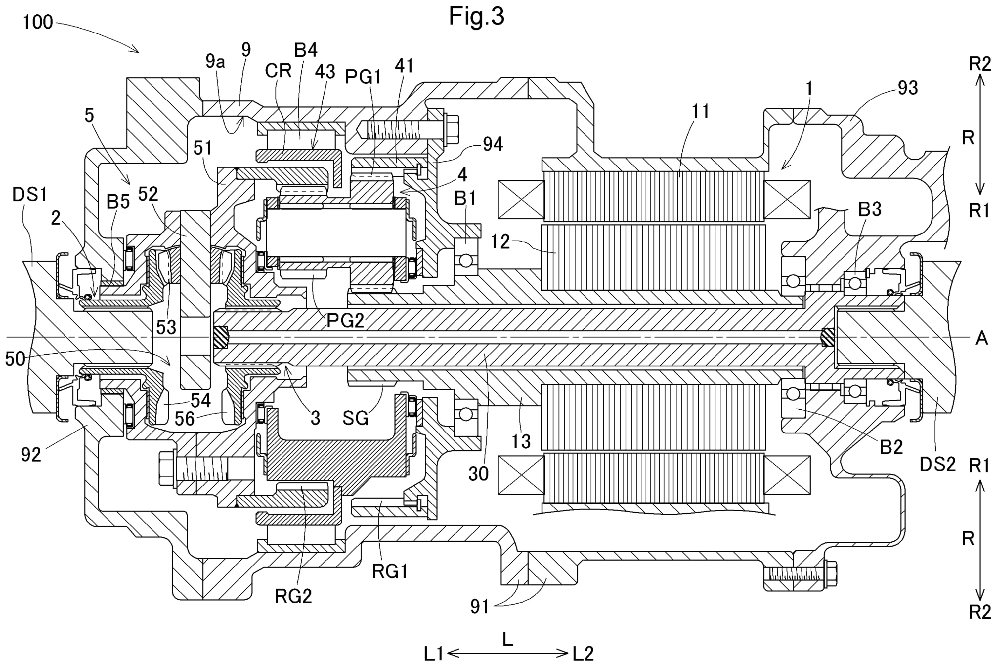

Hereinafter, an embodiment of a vehicle drive device will be described with reference to the drawings, and two aspects of a first example and a second example will be exemplified. A configuration of a power transmission mechanism is common between the first example and the second example, and the skeleton diagram of FIG. 1 is common between the first example and the second example. FIG. 2 is a schematic cross-sectional view of a vehicle drive device 100 of the first example, and FIG. 3 is a schematic cross-sectional view of the vehicle drive device 100 of the second example. Matters common between the first example and the second example will be described without distinguishing the first example and the second example.

As illustrated in FIGS. 1 to 3, the vehicle drive device 100 includes a rotary electric machine 1 serving as a driving force source for a pair of wheels, a first output member 2 drivingly coupled to a first wheel W1, a second output member 3 drivingly coupled to a second wheel W2, a planetary gear mechanism 4, an output differential gear device 5, and a case 9. At least one of a first differential side gear 54 and a first drive shaft DS1 described later corresponds to the first output member 2, and at least one of a second differential side gear 56, a second drive shaft DS2, and a coupling shaft 30 described later corresponds to the second output member 3. The case 9 accommodates the rotary electric machine 1, the planetary gear mechanism 4, and the output differential gear device 5. The first differential side gear 54, the second differential side gear 56, and the coupling shaft 30 are also accommodated in the case 9, and when these components correspond to the first output member 2 and the second output member 3, respectively, the case 9 also accommodates the first output member 2 and the second output member 3. When the first drive shaft DS1 and the second drive shaft DS2 correspond to the first output member 2 and the second output member 3, respectively, the case 9 accommodates a part of the first drive shaft DS1 and a part of the second drive shaft DS2.

Here, in the present specification, the term "drivingly coupled" refers to a state in which two rotary elements are coupled such that a driving force can be transmitted, and includes a state in which the two rotary elements are coupled to rotate integrally or a state in which the two rotary elements are coupled such that a driving force can be transmitted via one or two or more transmission members. Examples of such a transmission member include various members that transmit the rotation at the same speed or at variable speeds, such as shafts, gear mechanisms, belts, and chains. Note that examples of the transmission member may include an engagement device that selectively transmits the rotation and the driving force, such as a friction engagement device and a meshing type engagement device.

In the following description, a direction along a rotation axis (rotation axis (rotor axis A) of a rotor 12) of the rotary electric machine 1 is referred to as an "axial direction L". Further, one side in the axial direction L is referred to as an "axial direction first side L1", and the other side in the axial direction L is referred to as an "axial direction second side L2". A direction orthogonal to the rotor axis A is referred to as a "radial direction R". Further, In the radial direction, a side of the rotor axis A is referred to as a "radially inner side R1", and an opposite side thereof is referred to as a "radially outer side R2". A direction around the rotor axis A is referred to as a "circumferential direction".

The rotary electric machine 1, the first output member 2, the second output member 3, the planetary gear mechanism 4, and the output differential gear device 5 are coaxially disposed. In the embodiment, the rotary electric machine 1, the planetary gear mechanism 4, and the output differential gear device 5 are disposed in this order from the axial direction second side L2 toward the axial direction first side L1. Regarding the arrangement of two elements, "overlapping as viewed in a specific direction" means that when a virtual straight line parallel to a visual line direction is moved in directions each orthogonal to the virtual straight line, a region in which the virtual straight line intersects with both of the two elements at least partially exists.

As illustrated in FIGS. 2 and 3, in the embodiment, the case 9 includes a peripheral wall portion 91, a first sidewall portion 92, a second sidewall portion 93, and a support wall portion 94.

The peripheral wall portion 91 is formed in a tubular shape that covers the rotary electric machine 1, the first output member 2, the second output member 3, the planetary gear mechanism 4, and the output differential gear device 5 from the radially outer side R2. Each of the first sidewall portion 92, the second sidewall portion 93, and the support wall portion 94 is formed to extend in the radial direction R and the circumferential direction. In the embodiment, the first sidewall portion 92 is formed to cover the output differential gear device 5 from the axial direction first side L1. Then, the second sidewall portion 93 is formed to cover the rotary electric machine 1 from the axial direction second side L2. Further, the support wall portion 94 is disposed between the rotary electric machine 1 and the planetary gear mechanism 4 in the axial direction L so as to partition an accommodating space for the rotary electric machine 1 and an accommodating space for the planetary gear mechanism 4 and the output differential gear device 5.

As illustrated in FIGS. 2 and 3, the peripheral wall portion 91 is formed by two case members that abut in the axial direction L. In the vehicle drive device 100 of the first example illustrated in FIG. 2, the first sidewall portion 92 is integrally formed with the peripheral wall portion 91 so as to close an opening of the peripheral wall portion 91 on the axial direction first side L1. In the vehicle drive device 100 of the second example illustrated in FIG. 3, the first sidewall portion 92 is formed of a member different from the member forming the peripheral wall portion 91, and abuts the member forming the peripheral wall portion 91 from the axial direction first side L1 so as to close an opening of the peripheral wall portion 91 on the axial direction first side L1. Further, as illustrated in FIGS. 2 and 3, the second sidewall portion 93 is formed of a member different from the member forming the peripheral wall portion 91, and abuts the member forming the peripheral wall portion 91 from the axial direction second side L2 so as to close an opening of the peripheral wall portion 91 on the axial direction second side L2.

The rotary electric machine 1 is a driving force source for the first wheel W1 and the second wheel W2. The rotary electric machine 1 has a function as a motor (electric motor) that receives electric power and generates power and a function as a generator (electric generator) that receives power and generates electric power. Specifically, the rotary electric machine 1 is electrically connected to a power storage device (not illustrated) such as a battery or a capacitor. The rotary electric machine 1 generates a driving force by electric power stored in the power storage device (power running). Further, the rotary electric machine 1 generates electric power by the driving force transmitted from the side of the first wheel W1 and the second wheel W2 to charge the power storage device (regeneration).

The rotary electric machine 1 is an inner rotor type rotary electric machine including the rotor 12 on the radially inner side R1 of a stator 11. Further, the rotary electric machine 1 is a rotating field type rotary electric machine, the stator 11 includes a stator coil, and the rotor 12 includes a permanent magnet. The rotor 12 is coupled to a hollow rotor shaft 13 through which the coupling shaft 30 passes on the radially inner side R1, and the rotor 12 and the rotor shaft 13 rotate integrally. On an outer peripheral side of the rotor shaft 13, a sun gear SG that is an input rotary element of the planetary gear mechanism 4 constituting a speed reducer is disposed so as to rotate integrally with the rotor shaft 13. The sun gear SG may be integrally formed of the same member as the rotor shaft 13, or may be formed of a member different from the rotor shaft 13 and coupled to the rotor shaft 13 by welding or the like. The rotor shaft 13 is rotatably supported with respect to the support wall portion 94 via a first rotor bearing B1 on the axial direction first side L1, and is rotatably supported with respect to the second sidewall portion 93 via a second rotor bearing B2 on the axial direction second side L2.

The planetary gear mechanism 4 functioning as a speed reducer includes an input rotary element (sun gear SG) that rotates integrally with the rotor shaft 13, a fixed element (first ring gear RG1) fixed to the case 9 that is a non-rotary member, an output rotary element (second ring gear RG2) that rotates integrally with a differential input element (differential case 51), and planetary gears (first pinion gear PG1, second pinion gear PG2). In the embodiment, the planetary gear mechanism 4 is a composite planetary gear mechanism including one sun gear SG, two ring gears (first ring gear RG1 and second ring gear RG2), and two planetary gears (first pinion gear PG1 and second pinion gear PG2) that are rotatably supported by a common carrier CR and rotate integrally. The two planetary gears rotate with a pinion shaft fixed to the carrier CR as a rotation shaft, and are supported by the carrier CR to revolve around the rotor axis A that is a rotation axis of the planetary gear mechanism 4. In the embodiment, the second pinion gear PG2 has a smaller diameter than the first pinion gear PG1. The first pinion gear PG1 meshes with the sun gear SG and the first ring gear RG1, and the second pinion gear PG2 rotates integrally with the first pinion gear PG1 and meshes with the second ring gear RG2. The carrier CR is not coupled to any rotary element or fixed element.

In the embodiment, the first ring gear RG1 is fixed to the support wall portion 94 disposed between the rotary electric machine 1 and the planetary gear mechanism 4 in the axial direction L in the case 9. That is, a non-rotary member that fixes the first ring gear RG1 is the support wall portion 94 and is the case 9. As illustrated in FIGS. 2 and 3, the support wall portion 94 includes a protruding portion 41 that protrudes from the support wall portion 94 toward the axial direction first side L1. The protruding portion 41 is, for example, an annular member. The protruding portion 41 overlaps the first ring gear RG1 and the first pinion gear PG1 as viewed in the radial direction. The protruding portion 41 may be integrally formed with the support wall portion 94, or may be formed of a member different from the support wall portion 94 and coupled to the support wall portion 94 by welding or the like. In the embodiment, the protruding portion 41 is coupled to the support wall portion 94 via a support member 42 extending in the radial direction R. The first ring gear RG1 is formed, for example, as a tooth portion (spline engagement portion or the like) on the radially inner side R1 of the protruding portion 41. Therefore, at least one of the protruding portion 41 and the support member 42 can be said to be a coupling portion between the first ring gear RG1 and the support wall portion 94.

Naturally, the first ring gear RG1 may be fixed to an inner wall surface 9a of the peripheral wall portion 91 or a radially protruding portion protruding in the radial direction R from the inner wall surface 9a of the peripheral wall portion 91, instead of the support wall portion 94. The radially protruding portion may also be formed integrally with the peripheral wall portion 91, or may be formed of a member different from the peripheral wall portion 91 and coupled to the support wall portion 94 by welding or the like.

The carrier CR is supported in the radial direction R with respect to the case 9 in a rotatable state with respect to the case 9 via a carrier bearing B4. The carrier bearing B4 is a rolling bearing. In common to the first example and the second example, the carrier bearing B4 supports the carrier CR from the radially outer side R2. As illustrated in FIG. 2, in the vehicle drive device 100 of the first example, the carrier CR is supported from the radially outer side R2 on the radially inner side R1 of the pinion shaft supported by the carrier CR. Therefore, an increase in radial dimension of the planetary gear mechanism 4 due to the arrangement of the carrier bearing B4 is restricted. Further, in the vehicle drive device 100 of the second example, as illustrated in FIG. 3, the carrier bearing B4 is disposed on the radially outer side R2 of the carrier CR, but as described later, the carrier bearing B4 is disposed in a space in which a distance in the radial direction R is likely to increase between the inner wall surface 9a of the case 9 and the planetary gear mechanism 4, thereby restricting an increase in radial dimension.

In the vehicle drive device 100 of the first example illustrated in FIG. 2, the carrier bearing B4 is supported by the support wall portion 94. As described above, the protruding portion 41 protrudes from the support wall portion 94 toward the axial direction first side L1. Further, the protruding portion 41 is supported by the support wall portion 94 via the support member 42 from the radially inner side R1. The carrier bearing B4 is disposed at a position overlapping the protruding portion 41 and the support member 42 as viewed in a radial direction along the radial direction R. As described above, at least one of the protruding portion 41 and the support member 42 is a coupling portion between the first ring gear RG1 and the support wall portion 94. Therefore, it can be said that the carrier bearing B4 is disposed at a position overlapping the coupling portion between the first ring gear RG1 and the support wall portion 94.

As described above, the second pinion gear PG2 has a smaller diameter than the first pinion gear PG1. Therefore, in the radial direction R, a space is more easily secured between the second pinion gear PG2 and the inner wall surface 9a of the peripheral wall portion 91 of the case 9 than between the first pinion gear PG1 and the inner wall surface 9a. Therefore, in the vehicle drive device 100 of the second example illustrated in FIG. 3, the carrier CR includes an outer edge portion 43 located further on the radially outer side R2 with respect to the second ring gear RG2 meshing with the second pinion gear PG2. The outer edge portion 43 overlaps the second ring gear RG2 and the second pinion gear PG2 as viewed in the radial direction. Then, the carrier CR is supported at the outer edge portion 43 in a rotatable state with respect to the inner wall surface 9a of the case 9. The carrier bearing B4 is disposed between the inner wall surface 9a of the case 9 and the outer edge portion 43 of the carrier CR in the radial direction R, at a position overlapping the second ring gear RG2 as viewed in the radial direction.

A configuration in which the carrier CR is directly supported by the case 9 (including the support wall portion 94) via the carrier bearing B4 in common to the first example and the second example is illustrated. However, it does not prevent a configuration in which the carrier bearing B4 is indirectly supported by the case 9 by being supported by another member such as a bracket fixed to the case 9.

The output differential gear device 5 is configured such that a bevel gear type differential gear mechanism 50 including a plurality of differential pinion gears 53, a pair of differential side gears (first differential side gear 54 and second differential side gear 56), and a plurality of differential pinion shafts 52 is accommodated inside the differential case 51. The differential case 51 is a differential input element that is coupled to the second ring gear RG2, which is an output rotary element of the planetary gear mechanism 4, and rotates integrally therewith. For example, the second ring gear RG2 and the differential case 51 are integrally coupled by welding.

The differential pinion gear 53 is supported by the differential case 51 and is rotatably supported by the plurality of differential pinion shafts 52 arranged radially (for example, in a cross shape) about a rotation axis (rotor axis A) of the differential case 51. The first differential side gear 54 and the second differential side gear 56 mesh with each of the plurality of differential pinion gears 53 and rotate about the rotation axis (rotor axis A) of the differential case 51. The first differential side gear 54 is drivingly coupled to the first wheel W1 via the first drive shaft DS1. The second differential side gear 56 is drivingly coupled to the second wheel W2 via the second drive shaft DS2. Note that since the planetary gear mechanism 4 and the rotary electric machine 1 are disposed between the second differential side gear 56 and the second wheel W2 in the axial direction L, the second differential side gear 56 is coupled to the coupling shaft 30 penetrating the planetary gear mechanism 4 and the rotary electric machine 1 in the axial direction L, the coupling shaft 30 is coupled to the second drive shaft DS2, and the second drive shaft DS2 is coupled to the second wheel W2. In common to the first example and the second example, the coupling shaft 30 is rotatably supported with respect to the second sidewall portion 93 via an output bearing B3.

When input from the sun gear SG of the planetary gear mechanism 4 is output from the second ring gear RG2 in a state where the first ring gear RG1 is fixed and the carrier CR is free, the planetary gear mechanism 4 of the embodiment can achieve a high reduction ratio of 20 or more while restricting the dimension in the radial direction R to be small. Further, in the single-shaft vehicle drive device 100 as in the embodiment, it is easy to provide a design to offset a meshing reaction force of the gears in the radial direction R of the planetary gear mechanism 4, and it is easy to reduce a loss of torque in a power transmission path by omitting a bearing in the radial direction R. In addition to the fact that it is easy to reduce the size of the rotary electric machine 1, it is easy to further reduce the size of the vehicle drive device 100 since it is easy to reduce the number of bearings in the radial direction R.

However, if the number of bearings in the radial direction R decreases, a centrifugal force due to eccentricity of the rotor 12 tends to increase when the rotor 12 of the rotary electric machine 1 rotates at a high speed, and primary vibration of the rotation of the rotor 12 may be noticeable in the entire vehicle drive device 100 due to the oscillation of the planetary gear caused by the centrifugal force. The vehicle drive device 100 of the embodiment is configured to be able to reduce the primary vibration of the rotation of the rotor 12 while restricting an increase in torque loss in the power transmission path.

As illustrated in FIGS. 2 and 3, in common to the first example and the second example, the differential case 51 is supported in the radial direction R with respect to the case 9 in a rotatable state with respect to the case 9 via a bush B5, the bush B5 being disposed at a position overlapping the differential gear mechanism 50 as viewed in the axial direction on the axial direction first side L1, which is a side opposite to the side where the planetary gear mechanism 4 is located with respect to the differential gear mechanism 50. That is, the differential case 51 is gently supported by the case 9 via the bush B5 with a slight gap in the radial direction R with respect to the case 9. Further, the carrier CR is supported in the radial direction R with respect to the case 9 in a rotatable state with respect to the case 9 via the carrier bearing B4.

Since the carrier CR is stably supported in the radial direction R with respect to the case 9 via the carrier bearing B4 that is a rolling bearing, even when the vibration caused by eccentricity of the rotor 12 is transmitted to the planetary gear mechanism 4 via the first pinion gear PG1, the vibration of the carrier CR is restricted. The output differential gear device 5 is supported on a side of the planetary gear mechanism 4 by self-alignment by meshing of the second ring gear RG2, and is supported on a side opposite to the planetary gear mechanism 4 by the case 9 via the bush B5. Even if the output differential gear device 5 is not firmly supported in the radial direction R, since the vibration of the carrier CR of the planetary gear mechanism 4 is restricted, transmission of vibration caused by eccentricity of the rotor 12 to the output differential gear device 5 is restricted. In the power transmission path from the rotary electric machine 1 to the output member, since the additional rotation support structure from the radial direction R is substantially limited to the carrier bearing B4, an increase in torque loss in the power transmission path is also restricted.

### [Summary of Embodiments]

Hereinafter, the vehicle drive device (100) described above will be briefly summarized.

According to one aspect, the vehicle drive device (100) is a vehicle drive device (100) including: a rotary electric machine (1) including a rotor (12); a first output member (2) drivingly coupled to a first wheel (W1); a second output member (3) drivingly coupled to a second wheel (W2); a planetary gear mechanism (4) configured to reduce a speed of rotation of the rotor (12); an output differential gear device (5) including a differential case (51) and a differential gear mechanism (50) accommodated in the differential case (51), and configured to distribute rotation transmitted from the planetary gear mechanism (4) to the differential case (51) to the first output member (2) and the second output member (3); and a case (9) accommodating the rotary electric machine (1), the planetary gear mechanism (4), and the output differential gear device (5). The rotary electric machine (1), the first output member (2), the second output member (3), the planetary gear mechanism (4), and the output differential gear device (5) are coaxially arranged. The planetary gear mechanism (4) includes a sun gear (SG), a carrier (CR), a first ring gear (RG1), and a second ring gear (RG2). The sun gear (SG) is coupled to the rotor (12) so as to rotate integrally therewith. The first ring gear (RG1) is coupled to a non-rotary member. The second ring gear (RG2) is coupled to the differential case (51) so as to rotate integrally therewith. The carrier (CR) rotatably supports a first pinion gear (PG1) and a second pinion gear (PG2) that rotate integrally with each other. The first pinion gear (PG1) meshes with the sun gear (SG) and the first ring gear (RG1). The second pinion gear (PG2) has a smaller diameter than the first pinion gear (PG1) and meshes with the second ring gear (RG2). Assuming a direction along a rotation axis (A) of the rotor (12) as an axial direction (L) and a direction orthogonal to the rotation axis (A) as a radial direction (R), the differential case (51) is supported in the radial direction (R) with respect to the case (9) in a rotatable state with respect to the case (9) via a bush (B5), the bush (B5) being disposed at a position overlapping the differential gear mechanism (50) as viewed in the axial direction on a side opposite to a side where the planetary gear mechanism (4) is located with respect to the differential gear mechanism (50). The carrier (CR) is supported in the radial direction (R) with respect to the case (9) in a rotatable state with respect to the case (9) via a rolling bearing (B4).

According to this configuration, the carrier that supports the first pinion gear (PG1) and the second pinion gear (PG2) is stably supported in the radial direction (R) with respect to the case (9) via the rolling bearing (B4). Accordingly, even when vibration caused by eccentricity of the rotor (12) is transmitted via the first pinion gear (PG1), vibration of the carrier (CR) is restricted. The output differential gear device (5) is supported on a side of the planetary gear mechanism (4) by self-alignment by meshing of the second ring gear (RG2), and is supported on a side opposite to the planetary gear mechanism (4) via the bush (B5) with a slight gap in the radial direction (R) with respect to the case (9). Even if the output differential gear device (5) is not firmly supported in the radial direction (R), since the vibration of the carrier (CR) is restricted, transmission of vibration caused by eccentricity to the output differential gear device (5) via the second pinion gear (PG2) is restricted. Since an additional support structure in the radial direction (R) is substantially limited to the rolling bearing (B4) that supports the carrier (CR), an increase in torque loss in a power transmission path from the rotary electric machine (1) to the output member (2, 3) is also restricted. As described above, according to this configuration, in a single-shaft vehicle drive device (100) that includes, as a speed reducer, a two-stage planetary gear mechanism (4) including one sun gear (SG), two planetary gears (PG1, PG2) supported by a common carrier (CR), and two ring gears (RG1, RG2), primary vibration of rotation of a rotor (12) can be reduced while restricting an increase in torque loss in a power transmission path.

Further, in the vehicle drive device (100), it is preferable that the case (9) includes a support wall portion (94) disposed between the rotary electric machine (1) and the planetary gear mechanism (4) in the axial direction (L), the non-rotary member is the support wall portion (94), and the rolling bearing (B4) is supported by the support wall portion (94) and is disposed at a position overlapping a coupling portion (41, 42) between the first ring gear (RG1) and the support wall portion (94) as viewed in a radial direction along the radial direction (R).

According to this configuration, a vibration transmission path via the rolling bearing (B4) is easily disposed on a radially inner side (R1). Therefore, it is possible to restrict an increase in dimensions of the vehicle drive device (100) in the axial direction (L) and the radial direction (R) due to the arrangement of the rolling bearing (B4). In addition, it is easy to reduce a diameter of the rolling bearing (B4) and to reduce a loss in rotational energy such as a torque loss due to the bearing.

Further, in the vehicle drive device (100), it is preferable that the second ring gear (RG2) has a smaller diameter than the first ring gear (RG1), the carrier (CR) includes an outer edge portion (43) located on an outer side (R2) in the radial direction (R) with respect to the second ring gear (RG2), and the rolling bearing (B4) is disposed between an inner wall surface (9a) of the case (9) and the outer edge portion (43) in the radial direction (R), at a position overlapping the second ring gear (RG2) as viewed in the radial direction along the radial direction (R).

According to this configuration, since the second ring gear (RG2) has a smaller diameter than the first ring gear (RG1), even when the rolling bearing (B4) is disposed on the outer side in the radial direction (R) with respect to the second ring gear (RG2), an increase in dimension of the vehicle drive device (100) in the radial direction (R) can be easily restricted. In addition, since the rolling bearing (B4) is disposed at a position overlapping the second ring gear (RG2) as viewed in the radial direction, an increase in dimension of the vehicle drive device (100) in the axial direction (L) by disposing the rolling bearing (B4) can be easily restricted.

Further, in the vehicle drive device (100), it is preferable that the second ring gear (RG2) and the differential case (51) are integrally coupled by welding.

According to this configuration, it is easy to construct a structure in which the differential case (51) of the output differential gear device (5) is supported on the side of the planetary gear mechanism (4) by using the self-alignment by the meshing of the second ring gear (RG2).

### Reference Signs List

1: rotary electric machine
2: first output member
3: second output member
4: planetary gear mechanism
5: output differential gear device
9: case (non-rotary member)
9a: inner wall surface
12: rotor
41: protruding portion (coupling portion)
42: support member (coupling portion)
43: outer edge portion
50: differential gear mechanism
51: differential case
94: support wall portion (non-rotary member)
100: vehicle drive device
A: rotor axis (rotation axis of rotor)
B4: carrier bearing (rolling bearing)
B5: bush
CR: carrier
L: axial direction
PG1: first pinion gear
PG2: second pinion gear
R: radial direction
R2: radially outer side (outer side in radial direction)
RG1: first ring gear
RG2: second ring gear
SG: sun gear
W1: first wheel
W2: second wheel

## Claims

1. A vehicle drive device comprising:
a rotary electric machine including a rotor;
a first output member drivingly coupled to a first wheel;
a second output member drivingly coupled to a second wheel;
a planetary gear mechanism configured to reduce a speed of rotation of the rotor;
an output differential gear device including a differential case and a differential gear mechanism accommodated in the differential case, and configured to distribute rotation transmitted from the planetary gear mechanism to the differential case to the first output member and the second output member; and
a case accommodating the rotary electric machine, the planetary gear mechanism, and the output differential gear device, wherein
the rotary electric machine, the first output member, the second output member, the planetary gear mechanism, and the output differential gear device are coaxially disposed,
the planetary gear mechanism includes a sun gear, a carrier, a first ring gear, and a second ring gear,
the sun gear is coupled to the rotor so as to rotate integrally therewith,
the first ring gear is coupled to a non-rotary member,
the second ring gear is coupled to the differential case so as to rotate integrally therewith,
the carrier rotatably supports a first pinion gear and a second pinion gear that rotate integrally with each other,
the first pinion gear meshes with the sun gear and the first ring gear,
the second pinion gear has a smaller diameter than the first pinion gear and meshes with the second ring gear,
assuming a direction along a rotation axis of the rotor as an axial direction and a direction orthogonal to the rotation axis as a radial direction,
the differential case is supported in the radial direction with respect to the case in a rotatable state with respect to the case via a bush, the bush being disposed at a position overlapping the differential gear mechanism as viewed in the axial direction on a side opposite to a side where the planetary gear mechanism is located with respect to the differential gear mechanism, and
the carrier is supported in the radial direction with respect to the case in a rotatable state with respect to the case via a rolling bearing.

2. The vehicle drive device according to claim 1, wherein
the case includes a support wall portion disposed between the rotary electric machine and the planetary gear mechanism in the axial direction,
the non-rotary member is the support wall portion, and
the rolling bearing is supported by the support wall portion and is disposed at a position overlapping a coupling portion between the first ring gear and the support wall portion as viewed in a radial direction along the radial direction.

3. The vehicle drive device according to claim 1, wherein
the second ring gear has a smaller diameter than the first ring gear,
the carrier includes an outer edge portion located on an outer side in the radial direction with respect to the second ring gear, and
the rolling bearing is disposed between an inner wall surface of the case and the outer edge portion in the radial direction, at a position overlapping the second ring gear as viewed in a radial direction along the radial direction.

4. The vehicle drive device according to any one of claims 1 to 3, wherein
the second ring gear and the differential case are integrally coupled by welding.
